# FASCICULE DE BREVET EUROPEEN

(11) **EP 4 571 461 B1**
(45) Date de publication et mention de la délivrance du brevet: **01.07.2026**
(21) Numéro de dépôt: 24219353.0
(22) Date de dépôt: 12.12.2024
(51) Int. Cl.: G06F 1/28, G06N 3/08

(54) **CARACTÉRISATION POUR L'OPTIMISATION DE LA CONSOMMATION ÉLECTRIQUE D'UN ENSEMBLE D'ÉQUIPEMENTS CONNECTÉS À UN RÉSEAU ÉLECTRIQUE**
CHARAKTERISIERUNG ZUR OPTIMIERUNG DES STROMVERBRAUCHS EINER GRUPPE VON GERÄTEN, DIE MIT EINEM STROMNETZ VERBUNDEN SIND
CHARACTERISATION FOR OPTIMISING THE POWER CONSUMPTION OF A SET OF DEVICES CONNECTED TO AN ELECTRICAL NETWORK

(30) Priorité: 14.12.2023 FR 2314217
(43) Date de publication de la demande: 18.06.2025
(73) Titulaire: Electricité de France, 75008 Paris (FR); Université Paris Cité, 75006 Paris (FR)
(72) Inventeur: DUFOUR, Luc, 78330 FONTENAY LE FLEURY (FR); CHAUSSUMIER, Pascal, 92190 MEUDON (FR); PETRALIA, Adrien, 75015 PARIS (FR); CHARPENTIER, Philippe, 78830 BULLION (FR); PALPANAS, Themistoklis, 75015 PARIS (FR); CAPIK, Justin, 75014 PARIS (FR)
(74) Mandataire: Regimbeau

(56) Documents cités:
- US-A1- 2021 158 150
- MICHELE DINCECCO ET AL: "Transfer Learning for Non-Intrusive Load Monitoring", ARXIV.ORG, CORNELL UNIVERSITY LIBRARY, 201 OLIN LIBRARY CORNELL UNIVERSITY ITHACA, NY 14853, 23 February 2019 (2019-02-23), XP081032576

## Description

### DOMAINE TECHNIQUE

La présente invention est relative à la détermination non intrusive de la consommation électrique d'équipements électriques situés dans un local déterminé.

L'invention concerne plus particulièrement un procédé de désagrégation de la courbe de charge d'un parc d'équipements afin de déterminer des consommations individuelles et de détecter les périodes d'activation des équipements.

Elle permet ainsi l'optimisation de la consommation électrique pour les utilisateurs (gestionnaires du local) et de la production électrique pour le fournisseur ou le distributeur.

### TECHNIQUE ANTÉRIEURE

Ces locaux, domestiques ou d'entreprise, comportent un nombre grandissant d'équipements électriques dont la nature et le comportement sont extrêmement divers, tant en termes de consommation que de rythme d'activation par période de temps.

Dans un local à usage d'habitation, on peut typiquement trouver des équipements électriques telles qu'une télévision connectée, des systèmes d'éclairage, des équipements électroménagers, des prises connectées, des chauffe-eau, des bornes de recharge, des tableaux électriques, des onduleurs, etc.

Or, il peut être de plus en plus important d'optimiser la consommation électrique, ou plus généralement énergétique, pour des raisons économiques et écologiques. Une telle optimisation ne peut passer que par la connaissance des comportements électriques individualisés par équipements.

En général, il n'existe pas de mesure de la consommation électrique de chaque équipement. Une telle approche nécessiterait l'installation d'un compteur électrique pour chaque équipement, ce qui n'est pas souhaitable en raison du coût additionnel que cela peut engendrer. En outre une telle solution ne serait vraisemblablement pas acceptable pour les utilisateurs.

Des approches de surveillance non intrusive de la charge (ou NILM pour « *Non Intrusive Load Monitoring* ») ont été proposées, par exemple dans US2021/158150 A1.

La désagrégation de courbe de charge vise à estimer la consommation d'énergie individuelle de chaque appareil, ou équipement, et/ou l'activation de l'état marche/arrêt, en utilisant uniquement la courbe de charge totale agrégée (puissance apparente consommée pour un logement). Cette courbe de charge total agrégée est disponible via un compteur électrique intelligent.

La désagrégation de courbe de charge a été initialement abordé comme un problème de combinaisons linéaires. Les premières recherche ont investigué l'utilisation d'algorithme d'optimisation combinatoire avec pour objectif d'estimer la proportion de la consommation d'énergie à chaque pas de temps et pour chaque appareil actif. Par la suite, les modèles de Markov cachés ont été l'approche privilégiée pendant plusieurs années.

Ces dernières années, des propositions ont été faites basées sur les réseaux de neurones et l'apprentissage profond.

Une des premières publications relatives à cette famille d'approches est l'article de Kelly, J., & Knottenbelt, W. « Neural nilm: Deep neural networks applied to energy disaggregation », in Proceedings of the 2nd ACM international conference on embedded systems for energy-efficient built environments (pp. 55-64), 2015.

D'autres approches sont basées sur des réseaux de neurones convolutifs, comme par exemple celle décrite dans Zhang, Chaoyun et al. "Sequence-to-point learning with neural networks for nonintrusive load monitoring." in AAAI Conference on Artificial Intelligence (2016).

Plus récemment, une nouvelle approche est apparue basée sur la technologie des « transformateurs » (ou « *transformers* » en anglais). Ce type d'algorithmes a été introduit dans l'article de Vaswani, Ashish et al. "Attention is All you Need." In Neural Information Processing Systems (2017).

Un exemple d'un tel algorithme « BERT4NILM » est décrit dans l'article de Zhenrui Yue, Camilo Requena Witzig, Daniel Jorde, et Hans-Arno Jacobsen "BERT4NILM: A Bidirectional Transformer Model for Non-intrusive Load Monitoring » in Proceedings of the 5th International Workshop on Non-Intrusive Load Monitoring (NILM'20). Association for Computing Machinery, New York, NY, USA, 89-93. https://doi.org/10.1145/3427771.3429390

Ce mécanisme permet une désagrégation partielle de la courbe de charge : la charge (ou consommation) individuelle de certains types d'équipement peut être déterminée, mais cela s'avère impossible, ou trop imprécis pour d'autres types d'équipement.

Il a été proposé par ailleurs de s'intéresser à la détermination de l'activité d'un équipement (c'est-à-dire à s'il est allumé ou non) sur une unité de temps, plutôt qu'à la désagrégation de sa courbe de charge.

Il existe donc un besoin d'améliorer les propositions actuelles de l'état de la technique.

### EXPOSÉ DE L'INVENTION

L'invention vise à combiner les approches par désagrégation de la courbe de charge et par détermination de l'activation d'un équipement. En particulier, elle vise à intégrer les deux approches de façon optimale, c'est-à-dire en minimisant les ressources nécessaires.

À ces fins, selon un premier aspect, la présente invention peut être mise en œuvre par un procédé de caractérisation de la consommation électrique d'un ensemble d'équipements situés dans un local déterminé, comportant la transformation d'un flux de valeurs de mesures d'une consommation électrique globale dudit ensemble, fourni par un dispositif de mesure associé audit local déterminé, en une série temporelle, ladite série temporelle étant fournie en entrée d'au moins un premier modèle prédictif adaptés pour fournir des données de consommation pour au moins un équipement respectif parmi un premier sous-ensemble dudit ensemble et d'au moins un second modèle prédictif adapté pour fournir des données d'activation pour au moins un équipement respectif parmi un second sous-ensemble dudit ensemble, dans lequel ledit au moins un second modèle prédictif comprend un premier sous-modèle correspondant audit au moins un premier modèle prédictif et un second sous-modèle adapté pour déterminer une probabilité d'activation à partir de la sortie dudit premier sous-modèle, et dans lequel ledit au moins un modèle prédictif est entraîné sur un ensemble d'apprentissage prédéterminé et ledit au moins un second modèle prédictif est entrainé à partir dudit premier modèle prédictif, par transfert, puis à partir d'un second ensemble d'apprentissage.

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit au moins un premier modèle prédictif est un réseau neuronal comportant un module de plongement, un module de transformateurs et un module de perceptron multicouche ;
- ledit second sous-modèle comprend deux couches denses entièrement connectées ;
- des ordres de pilotage destinés auxdits équipements sont déterminés par un module d'optimisation en fonction desdites données de consommation et desdites données d'activation. Ces ordres de pilotages peuvent être transmis ensuite aux équipements au moyen d'interfaces et d'adaptations protocolaires ou bien à des dispositifs adaptés au pilotage d'équipement ;
- lesdites données de consommation et d'activation sont transmis, sous une forme anonymisée, vers un concentrateur d'une seconde plateforme de service, adapté pour établir des statistiques sur la consommation d'un ensemble de locaux déterminés, afin d'adapter la production électrique d'un fournisseur d'énergie électrique ;
- un module d'entrainement, comportant lesdits au moins un premier et second modèles prédictifs, est mémorisé dans une structure sécurisé au sein d'une passerelle, et dans lequel une phase d'entrainement comprend la transmission dudit module vers une plateforme de service à travers un réseau de télécommunication, l'exécution dudit module d'entrainement par ladite plateforme de service, afin d'entrainer lesdits modules prédictifs, puis la transmission desdits modèles prédictifs vers ladite passerelle ;
- un module de classification pour apprentissage est adapté pour sélectionner lesdits ensembles d'apprentissage en fonction d'équipements présents dans ledit local déterminé ;
- lors de l'entrainement dudit second modèle prédictif à partir dudit second ensemble d'apprentissage, uniquement ledit second sous-modèle est adapté ;
- lors de l'entrainement dudit second modèle prédictif à partir dudit second ensemble d'apprentissage à la fois ledit premier sous-modèle et ledit second sous-modèle sont adaptés.

Un autre aspect concerne un programme d'ordinateur comportant des instructions pour mettre en œuvre un procédé tel que précédemment décrit, lorsque ledit procédé est mis en œuvre sur une plateforme de traitement de l'information.

Un autre aspect concerne une passerelle comprenant un processeur adapté pour mettre en œuvre un procédé tel que précédemment décrit, optionnellement en collaboration avec une plateforme de service à travers un réseau de télécommunication.

D'autres caractéristiques et avantages de l'invention apparaîtront à la lecture de la description qui suit d'un mode de réalisation préféré de l'invention, donnée à titre d'exemple et en référence aux dessins annexés.

### BRÈVE DESCRIPTION DES DESSINS

Les dessins annexés illustrent l'invention :
La figure 1 illustre schématiquement un contexte d'utilisation d'un procédé proposé.
La figure 2 représente schématiquement une vue fonctionnelle d'un système comportant une passerelle en collaboration avec une plateforme de service, selon un mode de réalisation de l'invention.
La figure 3 schématise une vue fonctionnelle d'une passerelle et l'utilisation de modèles prédictifs pour la caractérisation d'une consommation électrique, selon un mode de réalisation.
La figure 4 illustre une mise en œuvre d'une architecture d'un modèle prédictif basée sur le réseau « BERT4NILM, selon un mode de réalisation.
La figure 5 illustre un exemple d'architecture fonctionnelle pour un modèle prédictif d'un second type, selon un mode de réalisation.
La figure 6 illustre un mode de réalisation d'une phase d'apprentissage selon un mode de réalisation.

### EXPOSÉ DÉTAILLÉ DE MODES DE RÉALISATION PARTICULIERS

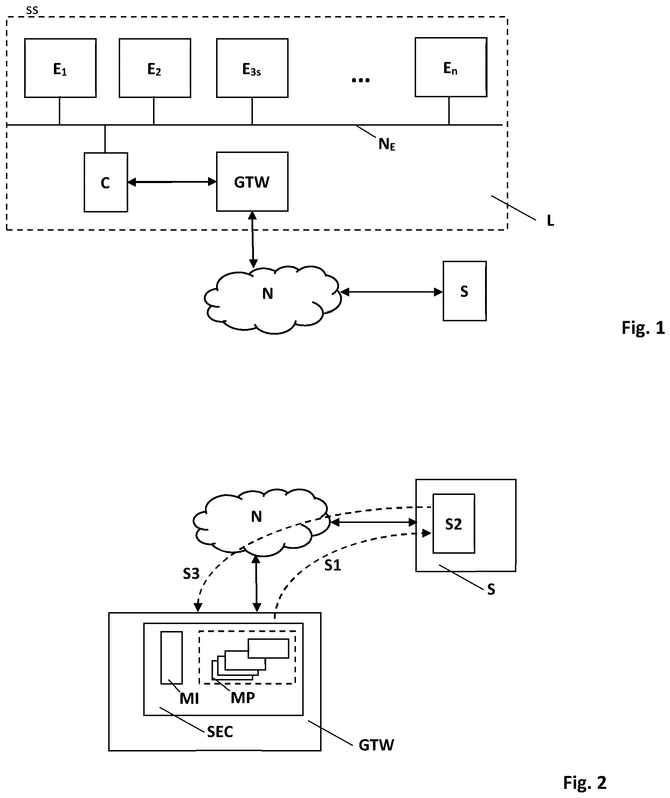

Sur la **figure 1** sont représentés un ensemble d'équipements, E₁, E₂, E₃, ..., Eₙ, situés dans un local déterminé L.

Le local déterminé L peut correspondre à un espace géographiquement limité dans le périmètre duquel un utilisateur donné peut disposer des objets connectés et les contrôler. Cet espace peut correspondre à un logement personnel (appartement, maison...), ou aux locaux d'une entreprise, d'un magasin, etc.

Le local déterminé peut possiblement avoir des extensions en dehors d'un espace limité, lorsque par exemple certains objets connectés sont déportés : une borne de chargement pour voiture électrique peut être situé dans un garage, un jardin, voir donner sur la chaussée, et être à l'extérieur de l'espace principale correspondant au logement, tout en étant dans le périmètre de contrôle de l'utilisateur.

Les équipements peuvent être de différentes natures. D'une façon générale, il s'agit de tout équipement connecté à un réseau de distribution d'énergie électrique N_{E} et consommant continument ou non cette énergie.

On peut par exemple citer :
- les équipements électro-ménager (fours, réfrigérateurs, plaque-chauffante...),
- les systèmes d'éclairage,
- les systèmes de chauffage et de régulation thermique,
- les systèmes de sécurité (détecteurs de mouvement, caméras de surveillance, ...)
   etc.

Un dispositif C est associé au local déterminé L, et est adapté pour fournir des données de mesure d'une charge, ou consommation, globale pour l'ensemble des équipements associés au local déterminé L. Ce dispositif peut mesurer l'énergie consommé sur le réseau de distribution N_{E} intérieur au local déterminé L. Les valeurs mesurées peuvent typiquement représenter une puissance apparente.

Ce dispositif est typiquement un compteur électrique dit « intelligent », c'est-à-dire adapté à fournir de telles données, généralement sous la forme d'un flot de valeurs numériques. Il peut s'agir notamment d'un compteur électrique de type Linky^{™} en France, par exemple.

Il peut être également prévu une passerelle GTW adaptée pour communiquer avec le dispositif de mesure C, afin d'acquérir un flux de valeurs de mesures d'une consommation électrique globale fournis par le dispositif de mesure C.

La passerelle GTW peut comporter des moyens de traitement de données. Elle peut également disposer d'interfaces avec le dispositif de mesure C et un réseau de télécommunication N.

L'interface avec le dispositif de mesure C peut être une interface radio, afin de minimiser la connectique filaire au sein du local L et par soucis d'ergonomie. Pour ce faire, un module radio peut devoir être connecté au dispositif de mesure C afin d'assurer la connectivité radio entre celui-ci et la passerelle GTW. Ce module peut être un émetteur radio local (ERL) utilisant le protocole Zigbee^{™}, par exemple.

Selon un mode de réalisation particulier, la passerelle GTW peut comporter un microprocesseur de type Raspberry Pi, de la mémoire RAM (entre 4 Go et 8 Go, par exemple), et une mémoire de masse, par exemple de type eMMC, d'environ 16 Go.

L'interface vers le réseau de télécommunication N peut être filaire (Ethernet) ou sans fil (Wi-Fi...). Plus précisément, ce réseau de télécommunication peut être composé d'un réseau local auquel une passerelle de télécommunication est connectée afin de permettre un accès au réseau de télécommunication public (Internet). Le réseau de télécommunication N peut être donc être vu comme un ensemble de sous-réseaux.

Le réseau de télécommunication N permet à la passerelle GTW de communiquer avec une plateforme de service S.

Différents partages de rôles entre la passerelle GTW et la plateforme de services S peuvent être envisagés.

La plateforme de service S peut être en charge de la gestion de la passerelle GTW, notamment des mises à jour logicielles, de la gestion des pannes, etc.

Des données et traitements peuvent également être transmis depuis la passerelle GTW vers la plateforme de service S. Ces traitements et données peuvent correspondre à des tâches qui ne peuvent pas être effectuées localement, notamment car la puissance de calcul d'une plateforme de services S est nécessaire. La plateforme de service S peut être déployée sur une ferme de serveurs ou, abstractisé sous la forme d'un serveur d'informatique en nuage (« *cloud computing* » en anglais). Sa puissance de calcul peut être adaptée en fonction de la tâche à effectuer, soumis par les passerelles GTW.

Ces traitements peuvent correspondre à l'entrainement de modèles prédictifs sur des ensembles d'apprentissage.

Selon un mode de réalisation, ainsi qu'illustré par l'exemple de la **figure 2****,** une structure numérique sécurisée SEC est prévue au sein de la passerelle GTW. La sécurisation est prévue pour empêcher tout tiers ne disposant pas des clés idoines de pouvoir lire le contenu de la structure numérique.

Selon un mode de réalisation, le module d'entraînement peut être mémorisé dans cette structure sécurisée SEC au sein de ladite passerelle.

Ce module d'entraînement peut comporter un ensemble de modèles prédictifs, MP, typiquement des réseaux neuronaux artificiels multicouches, et du code informatique, MI, permettant de mettre en œuvre les étapes de l'entrainement.

Lors d'une phase d'entrainement, ce module d'entraînement peut être transmis vers la plateforme de service S à travers le réseau de télécommunication, dans une étape S1.

Dans une étape S2, le module d'entraînement est exécuté par la plateforme de service S. Les modèles prédictifs MP transmis sont ainsi entraînés sur la base d'ensembles d'apprentissages (décrits ultérieurement).

Dans une étape S3, le module d'entrainement, ou uniquement les modèles prédictifs MP, sont transmis vers la passerelle GTW.

L'étape d'entraînement S2 est coûteuse en termes de puissance de calcul et de mémoire d'exécution. Elle est ainsi avantageusement exécutée sur une plateforme de service S qui peut être dimensionné de façon adéquate pour ce type de traitement, tandis que la plateforme GTW ne peut disposer de que ressources limitées puisqu'il s'agit d'un dispositif prévu pour être déployé chez les utilisateurs : elle répond donc à de fortes contraintes de coût et de dimensionnement.

Il est toutefois à noter qu'uniquement la phase d'entrainement est mise en œuvre sur la plateforme de service S. Comme on le verra par la suite, l'utilisation des modèles prédictifs MP afin de caractériser la consommation globale du logement L peut être effectuée entièrement localement par la passerelle GTW.

Dans le cas où l'accès au réseau de télécommunication N est interrompu, la passerelle GTW peut continuer à fonctionner pour la prédiction. L'entraînement peut également être mis en œuvre, mais les ressources de la passerelle GTW étant limité, le temps nécessaire pour la convergence de l'apprentissage sera nécessairement plus long.

Le procédé permet donc une collaboration mixte optimisée entre un traitement en informatique de nuage (« *cloud computing* » en anglais) et un traitement local (ou « *edge computing* » en anglais).

Ce module d'entrainement peut être inclus dans un « conteneur », qui est une structure de données contenant du code informatique et des éléments dépendants de ce code, adaptés pour être exécuté sur une machine virtuelle. Ainsi, entre autres avantages, le code peut être exécuté indépendamment du système d'exploitation et de l'infrastructure matérielle de l'équipement sur lequel il doit être exécuté : le même code peut ainsi être exécuté sur la passerelle GTW ou sur la plateforme de services S.

Ces conteneurs, mémorisés dans la structure numérique sécurisée SEC, permettent également de protéger les modèles prédictifs MP et le code informatique MI associé d'éventuels vols et piratages.

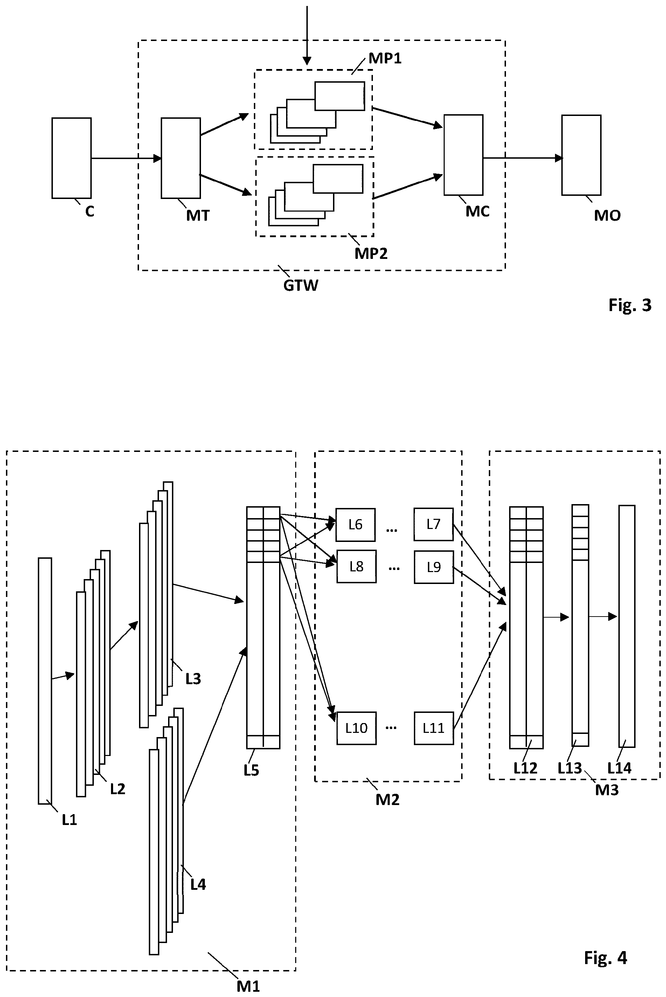

La **figure 3** illustre un mode de réalisation de l'utilisation des modèles prédictifs pour la caractérisation de la consommation électrique de l'ensemble des équipements situés dans le local déterminé L.

Comme mentionné précédemment, la passerelle GTW peut acquérir des flux de valeurs de mesure (ou flux de mesures, par abus de langage) d'une consommation électrique globale de l'ensemble d'équipements raccordés au réseau électrique N_{E} du local L.

La passerelle GTW peut comprendre un module de prétraitement MT (par exemple dans la structure numérique sécurisée SEC) adapté pour transformer ce flux de valeurs de mesure en une série temporelle.

Cette série temporelle est construite pour être fournie en entrée de modèles prédictifs MP1, MP2, de type réseau neuronal multicouches.

Cette série temporelle peut représenter une fenêtre temporelle dans laquelle chaque valeur représente une valeur de mesure pour un intervalle de cette fenêtre temporelle.

On peut par exemple avoir un intervalle de temps, ou pas de temps, de 15 secondes, et une série temporelle de 480 valeurs, ce qui représente au total une fenêtre temporelle de 480x15 = 2 heures.

Au sein de la série temporelle, la valeur affectée à un intervalle de temps peut correspondre à un rééchantillonnage des valeurs du flux de mesures. Par exemple, si plus d'une valeur du flux de mesures sont disponibles pour un même intervalle de temps, le module de prétraitement MT peut établir une valeur moyenne (par exemple) afin de construire la série temporelle de sortie.

Chaque modèle prédictif est adapté pour un type d'équipement particulier. En effet, chaque type d'équipement possède un comportement électrique propre. Comme il sera vu ultérieurement, chaque modèle prédictif est spécifiquement entraîné sur un ensemble d'apprentissage correspondant à un type ou classe d'équipements, de sorte qu'à l'issue de cette phase d'entrainement, le modèle est adapté pour ce type d'équipement.

Ces modèles prédictifs peuvent être divisés en deux sous-ensembles :
- un premier sous-ensemble de modèles prédictifs, MP1, est adapté pour fournir des données de consommation pour des équipements d'un premier sous-ensemble d'équipement (parmi l'ensemble d'équipements) ;
- un second sous-ensemble de modèles prédictifs, MP2, est adapté pour fournir des données d'activation pour les équipements d'un second sous-ensemble d'équipements (parmi l'ensemble d'équipements).

Autrement dit, en fonction de leur type, les équipements raccordés au réseau électrique NE peuvent être classés en deux catégories, selon si on peut déterminer des consommations électriques désagrégées à partir de la consommation globale acquise via le dispositif de mesure C, ou bien si on ne peut que déterminer leur activation, c'est-à-dire s'ils sont allumés ou éteints, pour chaque pas de temps considéré.

Cette répartition dans une première classe, correspondant au premier sous-ensemble de modèles prédictifs, MP1, ou dans une seconde classe, correspondant au second sous-ensemble de (seconds) modèles prédictifs, MP2, peut se faire en fonction d'un profil de la courbe de charge individuelle des équipements.

Une telle classification a par exemple été proposée dans l'article de George W. Hart, « Nonintrusive Appliance Load Monitoring », in Proceedings of the IEEE, December 1992, pp. 1870-1891. La classification proposée est la suivante :
- les usages à consommation permanente : cette catégorie regroupe les usages consommant une puissance constante, 24 heures sur 24 et 7 jours sur 7. Il s'agit par exemple des dispositifs d'alarme incendie ou de sécurité, les dispositifs de télécommunication de type modem, passerelle d'accès à internet, etc.
- Les usages allumés ou éteints, ou « ON/OFF » : cette catégorie est constituée d'appareils possédant deux états seulement. Un état OFF (ou éteint) où ils ne consomment pas et un état ON (ou allumé) où ils consomment une puissance approximativement constante. De nombreux appareils courants dans le secteur résidentiel appartiennent à cette catégorie. A titre d'exemple, on peut citer les bouilloires, ampoules électriques, réfrigérateurs, congélateurs, grille-pain, machines à café, fours à micro-ondes, fours « traditionnels », certains systèmes de chauffage, etc.
- Les usages à nombre d'états fini : cette catégorie inclut les usages passant par plusieurs états distincts où ils consomment une puissance constante pour chaque état. C'est typiquement le cas d'équipements suivant un cycle automatique formée d'une succession d'états. On peut par exemple citer les machines à laver, sèche-linge, lave-vaisselle, etc.
- Les usages à nombre d'états infini : cette catégorie inclut les équipements dont la puissance consommée peut varier continûment sur une certaine plage de valeurs, en général en fonction d'un réglage utilisateur. On peut citer par exemple les aspirateurs à puissance variable, etc.

Il est également possible de définir une classification plus fine, ou différente, que ces catégories.

Par exemple, dans le cas des systèmes de chauffage, considéré ci-dessus dans la catégorie d'usage ON/OFF, il peut être plus aisé d'extraire la courbe de charge d'une pompe à chaleur que celle d'un convecteur électrique. On peut donc considérer que chacun d'entre eux appartient à une classe différente.

Selon le type d'équipement, un premier ou un second sous-ensemble de modèles prédictifs (respectivement de premiers, MP1, et seconds, MP2, modèles prédictifs) sont utilisés.

Ce choix d'aiguiller un type d'équipement vers l'un ou l'autre des sous-ensembles de modèles prédictifs peut être effectués selon un paramétrage, qui peut être fixé par le fournisseur de la plateforme GTW et/ou des modèles prédictifs MP1, MP2.

Il peut dépendre de la capacité des modèles prédictifs du premier sous-ensemble à fournir des données de consommation pour ce type donné d'équipements à partir des données de consommation globale (désagrégation). Cette capacité peut être évaluée par le concepteur du modèle prédictif en question, et cette évaluation peut permettre d'affecter ce modèle prédictif à ce type d'équipement, ou bien, si l'évaluation n'est pas considérée suffisamment positive, à un modèle prédictif du second sous-ensemble.

Ce paramétrage peut évoluer au fil du temps. Par exemple, de nouveaux modèles prédictifs peuvent être rendus disponibles (par exemple du fait de nouveaux entrainements). Il est possible que de nouveaux modèles prédictifs du premier sous-ensemble offrent de meilleures capacités à désagréger des courbes de consommations globales. Dans ce cas, il peut être choisi de change l'affectation d'un type d'équipements du second sous-ensemble vers le premier sous-ensemble de modèles prédictifs. Ce changement peut être réalisé par une mise à jour du module de prétraitement MT, par exemple par téléchargement d'un code informatique ou de paramètres de configuration depuis la plateforme de service S.

Selon un mode de réalisation, le module de prétraitement MT peut être prévu pour définir un premier sous-ensemble d'équipements et un second sous-ensemble d'équipements, les deux sous-ensembles étant disjoints et formant partition de l'ensemble total des équipements.

Le module de prétraitement MT peut fournir la série temporelle d'un équipement en entrée d'un modèle prédictif correspondant à cet équipement. Ce module prédictif appartient
- au premier sous-ensemble de (premiers) modèles prédictifs MP1 si l'équipement appartient au premier sous ensemble d'équipements, ou,
- au deuxième sous-ensemble de (seconds) modèles prédictifs MP2, si l'équipement appartient au deuxième sous-ensemble d'équipements.

Selon un mode de réalisation, le module de prétraitement MT peut comprendre une table associant à chaque équipement ou à chaque type d'équipements un modèle prédictif dans l'un ou l'autre des sous-ensembles.

Selon un mode de réalisation, la désagrégation de la courbe de charge n'est mise en œuvre que pour les usages ON/OFF. Il est également possible, comme indiqué précédemment, de distinguer qu'une sous partie de ces équipements pour la désagrégation de la courbe de charge.

Autrement dit, selon ce mode de réalisation, le module de prétraitement MT peut être prévu pour (au moyen d'une table préconfigurée, par exemple) fournir la série temporelle reçu vers un module prédictif du premier sous-ensemble de modèles prédictifs MP1 si l'équipement appartient à certains types d'équipements d'usage ON/OFF, et vers un module prédictif du deuxième sous-ensemble MP2 dans les autres cas.

Comme évoqué précédemment, les modèles prédictifs MP1, MP2 peuvent être des réseaux de neurones artificiels.

Selon un mode de réalisation, les modèles prédictifs d'un même sous-ensemble, MP1, MP2, peuvent être structurellement identiques. Ils diffèrent par leur état intérieur (poids synaptiques des différentes couches constitutives) qui sont fixées lors de la phase d'apprentissage : comme il sera vu ultérieurement, chaque modèle prédictif fait l'objet d'un apprentissage sur un ensemble d'apprentissage spécifique.

Selon un mode de réalisation, un réseau neuronal comportant un module de plongement, un module de transformateurs et un module de perceptron multicouche.

La figure 4 illustre une mise en œuvre d'une telle architecture basée sur le réseau « BERT4NILM ». Ce type de réseau a été introduit dans l'article de Zhenrui Yue, Camilo Requena Witzig, Daniel Jorde, et Hans-Arno Jacobsen "BERT4NILM: A Bidirectional Transformer Model for Non-Intrusive Load Monitoring » in Proceedings of the 5th International Workshop on Non-Intrusive Load Monitoring (NILM'20). Association for Computing Machinery, New York, NY, USA, 89-93. https://doi.org/10.1145/3427771.3429390

Une architecture BERT4NILM est basée sur l'architecture bien connue BERT décrite dans l'article de Devlin, Jacob, Chang, Ming-Wei, Lee, Kenton, et al. « Bert: Pre-training of deep bidirectional transformers for language understanding", arXiv preprint arXiv:1810.04805, 2018.

Un réseau BERT4NILM se compose d'un module de plongement M1, d'un module de transformateurs M2 et d'un module de perceptron multicouche M3, s'enchainement séquentiellement.

Le module de plongement M1 (ou « *embeddings* » en anglais) comprend une extraction des caractéristiques (ou « *features* » en anglais) de l'entrée L1, ce qui augmente la dimensionnalité des données. On applique ensuite une opération de « *pooling* » (ou « mise en commun ») dans une couche L3.

La sortie de cette couche L3 est ensuite additionnée à une matrice de plongement de position L4, dans la résultante, L5, peut former l'entrée des transformateurs (ou « *transformers* » en anglais) L6, L7 ..., L11, du module de transformateurs M2.

Le module de transformateurs est formé de plusieurs couches, chaque couche comportant plusieurs têtes d'attention. Ce concept d'attention dans un réseau de neurones artificiels a été introduit par l'article de Vaswani, Ashish, Noam M. Shazeer, Niki Parmar, Jakob Uszkoreit, Llion Jones, Aidan N. Gomez, Lukasz Kaiser and Illia Polosukhin. "Attention is All you Need" in Neural Information Processing Systems (2017).

Le module de perceptron multicouche M3 comporte une couche de déconvolution L12, et deux couches linéaires L13, L14, afin de fournir un vecteur de sortie de même dimension que l'entrée.

L'entrée du modèle prédictif MP1 est une série temporelle obtenue à partir d'un flux de valeurs de mesures d'une consommation électrique globale.

Cette série temporelle est représentative du flux de valeurs de mesures de la consommation électrique globale de l'ensemble des équipements connectés au réseau de distribution électrique. La sortie L14 du modèle prédictif correspondant à un équipement donné est également une série temporelle, mais celle-ci est représentative d'un flux de valeurs de mesure de la consommation électrique prédite (ou estimée) pour cet équipement donné.

Autrement dit, le modèle prédictif MP1 permet d'extraire une courbe de consommation d'un équipement donné à partir de la courbe de consommation de l'ensemble des équipements.

Ces données de consommation fournies par le modèle prédictif MP1 peuvent être de même dimension que le vecteur d'entrée L1, c'est-à-dire représenter une fenêtre temporelle de même longueur avec un pas identique.

En agrégant au fil de l'eau les données de consommations, on peut obtenir une courbe de consommation pour un équipement donné. Le début et la fin de cette courbe correspondent au déclenchement et à l'arrêt du processus de prédiction qui vient d'être décrit. Selon un mode de réalisation, préférentiellement, ce processus est mis en œuvre continument, ou en tout cas sur des durées longues, afin de pouvoir déterminer des résultats exploitables par le module d'optimisation MO.

La même série temporelle, obtenue à partir du flux de mesures fournie par le dispositif de mesure C, peut être fournie à une pluralité de modèles prédictifs du premier ensemble de modèles prédictifs, MP1. Chacun étant entraîné pour un type d'équipement particulier, permettra de déterminer des données de consommations pour les équipements appartenant à ce type. Autrement dit, on obtient en sortie une pluralité de courbes de charge.

Par ailleurs, le module de prétraitement MT peut être prévu pour (au moyen d'une table préconfigurée, par exemple) fournir la série temporelle reçu vers un module prédictif du deuxième sous-ensemble MP2, dans les cas précédemment décrits.

Ces seconds modèles prédictifs MP2 sont structurellement différents des premiers modèles MP1 puisqu'ils visent à effectuer une classification et non pas une régression.

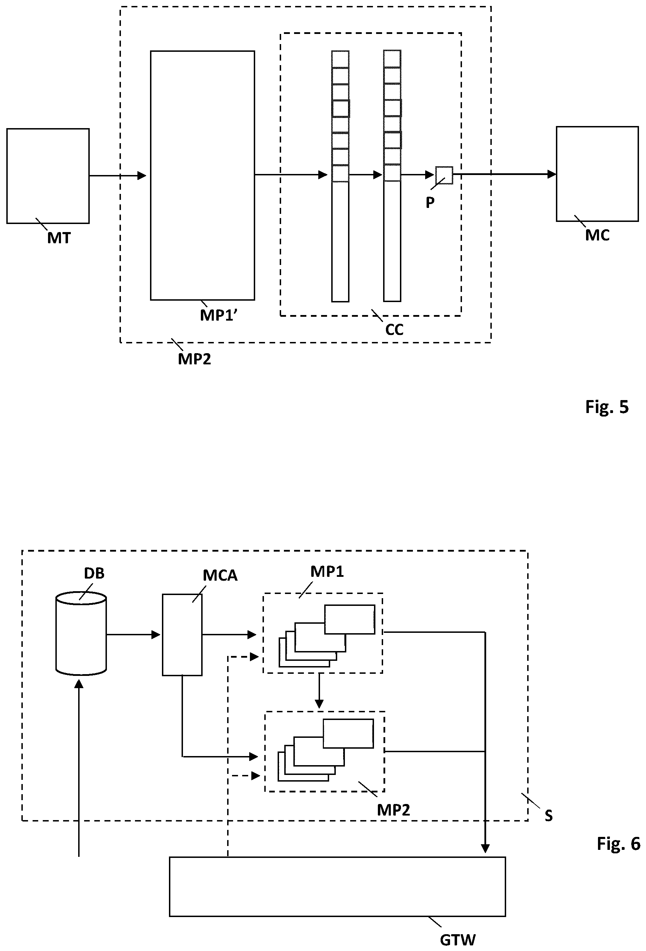

La **figure 5** illustre un exemple d'architecture fonctionnelle pour un modèle prédictif MP2 du deuxième sous-ensemble.

Ce second modèle prédictif MP2 comprend un premier sous-modèle MP1' correspondant au premier modèle prédictif MP1 et un second sous-modèle CC adapté pour déterminer une probabilité d'activation P à partir de la sortie du premier sous-modèle, MP1'.

Le premier sous-modèle MP1' peut être structurellement identique au premier modèle prédictif MP1 : même nombre de couches, même nombre de neurones par couche, etc. Ainsi, tous deux peuvent correspondre à la mise en œuvre illustrée en **figure 4****.** Par contre, ils peuvent différer par leur état interne, déterminé par la phase d'apprentissage. Autrement dit, selon des modes de réalisation, les poids synaptiques peuvent différer entre les deux modèles MP1, MP1'.

Le second sous-modèle CC peut comporter deux couches denses entièrement connectées. Elles visent à résumer l'information de la représentation obtenue en sortie du premier sous-modèle MP1' afin d'obtenir une probabilité P de classification.

Cette classification P représente une probabilité d'activation d'un équipement donné dans la fenêtre temporelle correspondant aux données d'entrée, c'est-à-dire si cet équipement est allumé (c'est-à-dire consomme de l'énergie électrique) ou non. Comme précédemment expliqué, une pluralité de modèles prédictif MP2 peut être prévue, chacun correspondant à un type d'équipement donné.

Cette probabilité peut être simplement seuillée pour fournir une activation binaire, c'est-à-dire une estimation de si l'équipement est allumé ou éteint durant la période temporelle correspondante.

Les sorties des différents modèles prédictifs, des deux sous-ensembles, sont transmis à un module de caractérisation MC en charge de traiter ses résultats individuels de chaque modèle prédictif pour fournir un résultat exploitable, par exemple par un module d'optimisation MO.

Ce module de caractérisation MC agrège les sorties des différents modules prédictifs et peut également être prévu pour gérer l'aspect temporel en sérialisant les différentes sorties en fonction du temps.

Il peut par exemple reconstituer une courbe de consommation à partir des sorties des modèles prédictifs du premier sous-ensemble qui correspondent à des fenêtres temporelles. Il peut pour ce faire les mettre bout à bout.

Il peut également construire une courbe d'activation en faisant correspondre la sortie des modèles prédictifs du second sous-ensembles à chaque intervalle de temps correspondant.

On peut ainsi obtenir une série de courbes, soit de consommation, soit d'activation, correspondant aux différents équipements connectés au réseau de distribution électrique.

D'une façon générale, les modèles prédictifs MP1, MP2, permettent ensemble d'obtenir une caractérisation de la consommation électrique d'un ensemble d'équipements E₁, E₂, E₃, ..., Eₙ situés dans un local déterminé L raccordés au réseau électrique, à partir d'un flux de valeurs de mesures de consommation électrique globale fourni par un dispositif de mesure C associé au local déterminé L.

La caractérisation de la consommation électrique pour un local L est importante à différents titres, et peut être exploitée de différentes façons.

D'un point de vue général, cette caractérisation possède un grand intérêt, tant d'un point de vue purement scientifique que d'un point de vue technologique.

Elle permet notamment d'aider à la maîtrise de l'énergie tant du point de vue du consommateur, du point de vue du fournisseur d'énergie et du point de vue global. Ce dernier point répond aux exigences actuelles et à venir sur l'impact écologique de la consommation énergétique des utilisateurs (tant en résidentiel que dans le domaine de l'industrie).

En outre, afin de concevoir des bâtiments intelligents, des systèmes de distributions plus efficaces, etc., il est important pour la communauté scientifique de disposer de métriques plus précises et plus nombreuses. Un tel mécanisme de caractérisation de la consommation électrique d'un foyer, ou d'une entreprise, peut contribuer à constituer une base de connaissance permettant de faciliter la recherche et le développement dans ces domaines.

La caractérisation de la consommation électrique peut être utilisé pour l'optimisation de la production d'énergie du fournisseur d'énergie électrique.

Les caractérisations d'un grand nombre de consommateurs finaux peuvent être transmis, sous une forme anonymisée, vers un concentrateur qui peut établir des statistiques sur la consommation. Ce concentrateur peut être un module applicatif sur une plateforme de service accessible au fournisseur d'énergie.

A titre d'exemple, il est possible d'établir une courbe de consommation, ou d'activation, moyenne par type d'équipements.

En fonction de ces statistiques, le fournisseur d'énergie peut adapter son réseau de production. Il peut notamment construire une prédiction fiable des usages des clients et ainsi prévoir des montées en charge de ses points de production ou en au contraire des baisses de charges, lui permettant ainsi de diminuer son exposition aux risques spéculatifs du marché inter-producteurs de l'électricité.

Le procédé de caractérisation peut donc permettre aux fournisseurs d'énergie d'optimiser la production d'énergie, notamment d'éviter les gaspillages par surproduction, grâce à la remontée des données de caractérisation vers une plateforme de service accessible au fournisseur d'énergie.

Également, un module d'optimisation MO peut être prévue dans la passerelle GTW ou bien dans la plateforme de services S, afin de permettre l'optimisation du parc d'équipements E₁, E₂, E₃, ..., Eₙ situés dans un local déterminé L en fonction des données de consommation et des données d'activation obtenus des modèles prédictifs (via le module de caractérisation).

Préférentiellement, le module d'optimisation MO est embarqué (sous la forme d'un module logiciel ou applicatif) au sein de la passerelle GTW. Cela permet à l'optimisation de pouvoir se faire sur la base des informations disponibles localement : on minimise ainsi la transmission de données vers Internet, ce qui est intéressant au titre de la gestion des données personnelles et de l'économie de la bande passante et des ressources réseaux. En outre, l'optimisation peut se poursuivre même en cas de coupure du lien vers le réseau de télécommunication et la plateforme de service S.

Le module d'optimisation peut déterminer des ordres de pilotage pour un ou plusieurs équipements parmi ceux raccordés au réseau afin de répondre à ces contraintes internes ou externes au local déterminé L, ou bien au bâtiment auquel appartient le local déterminé L.

En particulier, une contrainte possible peut être d'équilibrer la consommation, ou tout du moins de contraindre les fluctuations de consommation en déjà d'un seuil donné.

Ainsi, en cas de pic de consommation (détectable à partir de la courbe de consommation fournie par le dispositif de mesure C), la caractérisation de la consommation électrique sur le parc d'équipements peut permettre de déterminer une cause probable de ce pic (soit par des données de consommation, soit, à défaut, par des données d'activation). Il est alors possible de déterminer des ordres de pilotage pour lisser la consommation électrique.

Par exemple, certains équipements peuvent être momentanément éteints ou forcés dans un état moins consommateur, pendant une durée correspondant à une activité de l'équipement source du pic de consommation.

A titre d'exemple illustratif, un système de chauffage d'une cuisine peut être baissé lorsqu'un four est mis en marche : sa durée de fonctionnement est limitée dans le temps de sorte que l'abaissement du chauffage est peu pénalisant pour les habitants.

Par ailleurs, la caractérisation de la consommation permet d'identifier la part de la consommation d'énergie par équipement et permet ainsi de fournir un coût énergétique pour chacun. Il peut être ainsi proposé à l'utilisateur des actions spécifiques de réduction de consommation d'énergie par équipement et de fournir un temps de retour sur investissement précis puisqu'il est possible de connaître la part énergétique et financière associées à chaque équipement : il est ainsi possible de lui indiquer une économie possible sur sa facture d'énergie en baissant le chauffage d'un degré.

Également, la caractérisation des équipements électriques sur une fenêtre de temps donné peut être une des entrées d'un modèle de pilotage des charges qui se baserait sur des prédictions énergétiques qui prendraient en entrée cette caractérisation. Par exemple, ce modèle de pilotage pourra envoyer des ordres pour allumer ou éteindre des appareils électriques suivant la caractérisation passé réalisée.

Par ailleurs, le module d'optimisation MO peut fournir à l'utilisateur un état représentatif des données de consommations et d'activation de l'ensemble des équipements. Ces données peuvent être agrégées et consolider de sorte à fournir une vue globale sur son usage électrique.

Le module d'optimisation peut détecter des opportunités d'optimisation et, éventuellement après validation d'un utilisateur du local L, transmettre des ordres de commandes adaptés.

Il peut par exemple détecter des équipements en veille et consommateurs d'électricité : équipements électroménagers branchés, par exemple. Il peut également relever des systèmes de chauffage utilisés la nuit. Dans certains cas, il peut être intéressant de limiter ces usages et le module d'optimisation MO peut proposer des ordres de pilotage visant à réduire ces consommations qui ne devraient pas impacter le confort des habitants (ou en tout cas présenter un rapport économie d'énergie / perte de confort supérieur à un).

Bien évidemment, d'autres scénarios d'optimisation peuvent être mis en œuvre par le module d'optimisation, MO, en tirant profit de la connaissance fin des usages électriques du local obtenu par le procédé de caractérisation décrit.

Différents autres cas d'usage sont en outre décrits dans la littérature scientifiques ou commerciales liée à la caractérisation de charge non intrusive (NILM).

Il ressort clairement que la caractérisation obtenue par la passerelle GTW permet l'optimisation de la consommation électrique des consommateurs et l'optimisation de le production électrique des fournisseurs d'énergie électrique.

Comme il a été indiqué, ce procédé de caractérisation repose sur des modèles prédictifs MP1, M2, ayant fait l'objet d'une phase d'entraînement.

Au cours de celle-ci :
- le ou les premiers modèles prédictifs MP1 du premier ensemble sont entraînés sur un ensemble d'apprentissage prédéterminé,
- le ou les seconds modèles prédictifs MP2 du deuxième ensemble sont entraînés à partir des premiers modèles prédictifs, MP1, par transfert, puis à partir d'un second ensemble d'apprentissage.

La **figure** 6 illustre un mode de réalisation de cette phase d'apprentissage.

Dans ce mode de réalisation, l'apprentissage est déployé sur la plateforme de services S. Comme décrit précédemment, dans un mode de réalisation, un module d'entraînement peut être transmis depuis la passerelle GTW vers la plateforme de service S à travers le réseau de télécommunication (flèches pointillées).

Une base de données DB contient un ensemble d'apprentissage prédéterminé pour les premiers modèles prédictifs MP1 et un second ensemble d'apprentissage pour les seconds modèles prédictifs MP2.

Cet ensemble d'apprentissage associent des séries temporelles correspondant à des flux de valeurs de mesures d'une consommation électrique globale à
- des données de consommation, dans le cas du premier ensemble d'apprentissage (c'est-à-dire correspondant aux premiers modèles prédictifs)
- des données d'activation, dans le cas du second ensemble d'apprentissage

Ces données de consommation et d'activation correspondent à des étiquettes représentatives d'une réalité. Les ensembles d'apprentissage peuvent être constitués en réaliser des études expérimentales en laboratoire ou au sein de vrais locaux d'utilisateur, en disposant des équipements de mesure permettant de relever la consommation et/ou l'activation d'équipements individuels.

Des bases d'apprentissage publiques existent et peuvent être utilisées, comme les bases de données REDD, UK-DALE ou REFIT. Ces trois bases de données présentent des valeurs de consommation à pas temps fin (5-10 secondes) pour les courbes de charge globale et les équipements domestiques. REDD offre les données de 6 maisons américaines collectées en 2011, UK-DALE de 5 maisons anglaises collectées de 2012 à 2015, et REFIT de 23 maisons anglaises collectées de 2015 à 2017.

Selon un mode de réalisation, un module de classification pour l'apprentissage, MCA, est prévu pour sélectionner des ensembles d'apprentissage à partir du contenu des ensembles d'apprentissage contenu dans la base de données DB.

La sélection peut être effectuée en fonction des équipements contenus dans le local déterminé L. Les exemples sélectionnés dans la base de données pour constituer les ensembles d'apprentissage correspondent à ceux présentant une forte ressemblance avec le local déterminé L. Cette ressemblance est estimée à partir des types des équipements principaux (qui peuvent être fournis par une liste), mais aussi par d'autres éléments impactant : surface, maison individuelle ou appartement, etc.

Des équipements non-électrique peuvent être également pris en compte. Par exemple, la présence d'une cheminée ou d'un poêle peut impacter la consommation électrique pour les usages liés au chauffage.

Cette sélection permet donc de ne prendre en compte dans l'apprentissage que des exemples pertinents par rapport au local déterminé L. On obtient donc des modèles prédictifs MP1, MP2 adaptés au local déterminé L, ce qui permet des prédictions plus pertinentes.

Un modèle prédictif est entraîné pour chaque équipement, c'est-à-dire pour chaque étiquette, que celle-ci soit formée de données de consommation (pour un équipement donné) ou d'activation (également pour un équipement donné).

Un modèle prédictif MP1 est entraîné pour chacun des équipements connectés au réseau électrique du local déterminé L.

Dans le cas où les premiers modèles prédictifs sont de type BERT4NILM, l'apprentissage de ceux-ci peut être effectué conformément à l'article décrivant ce type d'architecture, notamment en termes de fonction de coût (ou « *loss function* » en anglais).

Les seconds modèles prédictifs sont entrainés une première fois par transfert, c'est-à-dire que l'état interne des premiers modèles prédictifs sont copiés pour former les seconds modèles prédictifs respectifs. Autrement dit, les connaissances acquises lors de la première phase d'entrainement (capturés par l'état des premières modèles prédictifs) est réutilisée, ou transférée, vers les seconds modèles prédictifs MP2.

Puis, le second ensemble d'apprentissage précédemment évoqué est utilisé pour une seconde « sous phase » d'entrainement. Ce second entrainement vise à spécialiser les seconds modèles prédictifs dans la tâche de détermination (ou prédiction) de données d'activation.

En d'autres termes, il vise à entrainer principalement le second sous-réseau CC prévu pour justement résumer l'information produite par le premier sous-réseau en une probabilité d'activation P.

Pour cet entrainement, une fonction de coût BCE (pour « *Binary Cross Entropy »,* en anglais, ou « entropie croisée binaire » en français) peut être utilisée entre la probabilité d'activation P en sortie et l'étiquette fournie par le second ensemble d'apprentissage (tel que sélectionné par le module de classification pour apprentissage MCA, le cas échéant). La fonction de coût BCE est une fonction très usuelle, se définissant comme mesure de la différence entre deux probabilités de distribution.

Cet entrainement permet de faire converger l'état interne des seconds modèles prédictifs pour les spécialiser dans une tâche de classification (détermination d'une activation P). En particulier, elle cherche à fixer l'état du second sous-réseau CC constitutif des seconds modèles prédictifs MP2.

Selon un mode de réalisation, l'état interne du premier sous-réseau MP1' est fixé pendant cet entrainement et reste donc le même que celui du premier modèle respectif MP1 correspondant. Autrement dit, uniquement le second sous-modèle CC est adapté pendant l'entrainement,

Selon un autre mode de réalisation, alternatif, l'état interne du premier sous-réseau MP1' n'est pas fixé pendant cet entrainement. Autrement dit, à la fois le premier sous-modèle MP1' et le second sous-modèle CC sont adaptés pendant l'entrainement.

Des études expérimentales ont démontré l'efficacité de l'approche proposée. En particulier, le procédé de caractérisation de la consommation électrique proposé offre des mesures de qualité (précision, taux de rappel, etc.) supérieures aux propositions de l'état de la technique pour un ensemble de types d'équipements électriques variés.

Certaines propositions de l'état de la technique peuvent atteindre des résultats meilleurs pour certains types d'équipements, mais dans la mesure où un local donné L comprend des équipements de types variés, ces mécanismes spécialisés ne sont pas satisfaisants.

Le procédé proposé, au contraire, permet d'atteindre des hautes performances dans le cas d'un ensemble d'équipements de types variés (réfrigérateur, congélateur, système de chauffage, ordinateur, fours micro-onde, machine à laver...).

En particulier, le procédé proposé permet de hautes performances dans le cas d'équipements de froid (congélateurs, réfrigérateurs...) pour obtenir des données de consommation par équipement. Il permet également de hautes performances dans l'obtention de données d'activation d'équipements de type électroménager.

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Procédé de caractérisation de la consommation électrique d'un ensemble d'équipements (E₁, E₂, E₃, ..., Eₙ) situés dans un local déterminé (L), comportant la transformation d'un flux de valeurs de mesures d'une consommation électrique globale dudit ensemble, fourni par un dispositif de mesure (C) associé audit local déterminé (L), en une série temporelle, ladite série temporelle étant fournie en entrée d'au moins un premier modèle prédictif (MP1) adaptés pour fournir des données de consommation pour au moins un équipement respectif parmi un premier sous-ensemble dudit ensemble et d'au moins un second modèle prédictif (MP2) adapté pour fournir des données d'activation pour au moins un équipement respectif parmi un second sous-ensemble dudit ensemble, dans lequel ledit au moins un second modèle prédictif (MP2) comprend un premier sous-modèle (MP1') correspondant audit au moins un premier modèle prédictif et un second sous-modèle (CC) adapté pour déterminer une probabilité d'activation (P) à partir de la sortie dudit premier sous-modèle, et dans lequel ledit au moins un modèle prédictif (MP1) est entraîné sur un ensemble d'apprentissage prédéterminé et ledit au moins un second modèle prédictif (MP2) est entrainé à partir dudit premier modèle prédictif, par transfert, puis à partir d'un second ensemble d'apprentissage.

2. Procédé selon la revendication précédente dans lequel ledit au moins un premier modèle prédictif (MP1) est un réseau neuronal comportant un module de plongement (M1), un module de transformateurs (M2) et un module de perceptron multicouche (M3).

3. Procédé selon la revendication précédente, dans lequel ledit second sous-modèle (CC) comprend deux couches denses entièrement connectées.

4. Procédé selon l'une des revendications précédentes dans lequel des ordres de pilotage destinés auxdits équipements sont déterminés par un module d'optimisation (MO) en fonction desdites données de consommation et desdites données d'activation.

5. Procédé selon l'une des revendications précédentes, dans lequel un module d'entrainement, comportant lesdits au moins un premier et second modèles prédictifs, est mémorisé dans une structure sécurisé (SEC) au sein d'une passerelle (GTW), et dans lequel une phase d'entrainement comprend la transmission dudit module vers une plateforme de service (S) à travers un réseau de télécommunication (N), l'exécution dudit module d'entrainement par ladite plateforme de service, afin d'entrainer lesdits modules prédictifs, puis la transmission desdits modèles prédictifs vers ladite passerelle (GTW).

6. Procédé selon l'une des revendications précédentes, dans lequel un module de classification pour apprentissage (MCA) est adapté pour sélectionner lesdits ensembles d'apprentissage en fonction d'équipements présents dans ledit local déterminé (L).

7. Procédé selon l'une des revendications précédentes, dans lequel lors de l'entrainement dudit second modèle prédictif (MP2) à partir dudit second ensemble d'apprentissage, uniquement ledit second sous-modèle (CC) est adapté.

8. Procédé selon l'une des revendications 1 à 6 dans lequel lors de l'entrainement dudit second modèle prédictif (MP2) à partir dudit second ensemble d'apprentissage à la fois ledit premier sous-modèle (MP1') et ledit second sous-modèle (CC) sont adaptés.

9. Programme d'ordinateur comportant des instructions pour mettre en œuvre un procédé selon l'une des revendications précédentes, lorsque ledit procédé est mis en œuvre sur une plateforme de traitement de l'information.

10. Passerelle (GTW) comprenant un processeur adapté pour mettre en œuvre un procédé selon l'une des revendications 1 à 8, optionnellement en collaboration avec une plateforme de service (S) à travers un réseau de télécommunication (N)

## Patentansprüche

1. Verfahren zur Charakterisierung des Stromverbrauchs einer Gruppe von Geräten (E₁, E₂, E₃, ..., Eₙ), die sich in einem bestimmten Raum (L) befinden, aufweisend die Umwandlung eines Stroms von Messwerten eines Gesamtstromverbrauchs der Gruppe, der von einer dem bestimmten Raum (L) zugeordneten Messvorrichtung (C) bereitgestellt wird, in eine Zeitreihe, wobei die Zeitreihe als Eingabe für mindestens ein erstes Vorhersagemodell (MP1) bereitgestellt wird, die dazu angepasst sind, Verbrauchsdaten für mindestens ein jeweiliges Gerät aus einer ersten Untergruppe der Gruppe bereitzustellen, und für mindestens ein zweites Vorhersagemodell (MP2), das dazu angepasst ist, Aktivierungsdaten für mindestens ein jeweiliges Gerät aus einer zweiten Untergruppe der Gruppe bereitzustellen, wobei das mindestens eine zweite Vorhersagemodell (MP2) ein erstes Untermodell (MP1') umfasst, das dem mindestens einen ersten Vorhersagemodell entspricht, und ein zweites Untermodell (CC), das dazu angepasst ist, aus der Ausgabe des ersten Untermodells eine Aktivierungswahrscheinlichkeit (P) zu bestimmen, und wobei das mindestens eine Vorhersagemodell (MP1) auf einem vorbestimmten Trainingsdatensatz trainiert wird und das mindestens eine zweite Vorhersagemodell (MP2) zunächst durch Transfer anhand des ersten Vorhersagemodells und anschließend anhand eines zweiten Trainingsdatensatzes trainiert wird.

2. Verfahren nach vorstehendem Anspruch, wobei das mindestens eine erste Vorhersagemodell (MP1) ein neuronales Netz ist, das ein Eintauchmodul (M1), ein Transformator-Modul (M2) und ein mehrschichtiges Perzeptron-Modul (M3) umfasst.

3. Verfahren nach vorstehendem Anspruch, wobei das zweite Untermodell (CC) zwei vollständig verbundene dichte Schichten umfasst.

4. Verfahren nach einem der vorstehenden Ansprüche, wobei Steuerbefehle für die Geräten von einem Optimierungsmodul (MO) in Abhängigkeit von den Verbrauchsdaten und den Aktivierungsdaten bestimmt werden.

5. Verfahren nach einem der vorstehenden Ansprüche, wobei ein Trainingsmodul, das das mindestens eine erste und zweite Vorhersagemodell aufweist, in einer gesicherten Struktur (SEC) innerhalb eines Gateways (GTW) gespeichert ist, und wobei eine Trainingsphase die Übertragung des Moduls an eine Serviceplattform (S) über ein Telekommunikationsnetz (N), die Ausführung des Trainingsmoduls durch die Serviceplattform zum Trainieren der Vorhersagemodule und anschließend die Übertragung der Vorhersagemodelle an das Gateway (GTW) umfasst.

6. Verfahren nach einem der vorstehenden Ansprüche, wobei ein Klassifizierungstrainingsmodul (MCA) dazu angepasst ist, die Trainingsdatensätze in Abhängigkeit von in dem bestimmten Raum (L) vorhandenen Geräten auszuwählen.

7. Verfahren nach einem der vorstehenden Ansprüche, wobei beim Trainieren des zweiten Vorhersagemodells (MP2) anhand des zweiten Trainingsdatensatzes ausschließlich das zweite Untermodell (CC) angepasst wird.

8. Verfahren nach einem der Ansprüche 1 bis 6, wobei beim Trainieren des zweiten Vorhersagemodells (MP2) anhand des zweiten Trainingsdatensatzes sowohl das erste Untermodell (MP1') als auch das zweite Untermodell (CC) angepasst werden.

9. Computerprogramm, das Anweisungen zur Durchführung eines Verfahrens nach einem der vorstehenden Ansprüche aufweist, wenn das Verfahren auf einer Informationsverarbeitungsplattform durchgeführt wird.

10. Gateway (GTW), umfassend einen Prozessor, der dazu angepasst ist, ein Verfahren nach einem der Ansprüche 1 bis 8 auszuführen, optional im Zusammenwirken mit einer Serviceplattform (S) über ein Telekommunikationsnetz (N).

## Claims

1. A method for characterizing the power consumption of a set of devices (E₁, E₂, E₃, ..., Eₙ ) located in a specific room (L), comprising the transformation of a stream of measurement values of the total power consumption of said set, provided by a measurement device (C) associated with said specific room (L), into a time series, said time series being supplied as input to at least a first predictive model (MP1) adapted to provide consumption data for at least one respective piece of equipment from a first subset of said set and to at least a second predictive model (MP2) adapted to provide activation data for at least one respective piece of equipment from a second subset of said set, wherein said at least one second predictive model (MP2) comprises a first submodel (MP1') corresponding to said at least one first predictive model and a second submodel (CC) adapted to determine an activation probability (P) from the output of said first submodel, and wherein said at least one predictive model (MP1) is trained on a predetermined training set and said at least one second predictive model (MP2) is trained from said first predictive model, via transfer learning, and then from a second training set.

2. A method according to the preceding claim, wherein said at least one first predictive model (MP1) is a neural network comprising a diving module (M1), a transformer module (M2), and a multilayer perceptron module (M3).

3. A method according to the preceding claim, wherein said second submodel (CC) comprises two fully connected dense layers.

4. A method according to one of the preceding claims, wherein control commands intended for said equipment are determined by an optimization module (MO) based on said consumption data and said activation data.

5. A method according to one of the preceding claims, wherein a training module, comprising said at least one first and second predictive models, is stored in a secure structure (SEC) within a gateway (GTW), and wherein a training phase comprises transmitting said module to a service platform (S) via a telecommunications network (N), executing said training module by said service platform to train said predictive modules, and then transmitting said predictive models to said gateway (GTW).

6. A method according to one of the preceding claims, wherein a machine learning classification module (MCA) is adapted to select said training sets based on equipment present in said specified location (L).

7. A method according to one of the preceding claims, wherein during the training of said second predictive model (MP2) based on said second training set, only said second sub-model (CC) is adapted.

8. A method according to any one of claims 1 to 6, wherein, when training said second predictive model (MP2) using said second training set, both said first submodel (MP1') and said second submodel (CC) are adapted.

9. A computer program comprising instructions for implementing a method according to one of the preceding claims, when said method is implemented on an information processing platform.

10. A gateway (GTW) comprising a processor adapted to implement a method according to any one of claims 1 to 8, optionally in collaboration with a service platform (S) via a telecommunications network (N)
